# FASCICULE DE BREVET EUROPEEN

(11) **EP 3 010 676 B1**
(45) Date de publication et mention de la délivrance du brevet: **12.02.2020**
(21) Numéro de dépôt: 14733279.5
(22) Date de dépôt: 06.06.2014
(51) Int. Cl.: B23H 3/04, B23H 9/00, B23H 9/10

(54) **PROCEDE ET ÉLECTRODE POUR LA REALISATION D'ALVEOLES D'UN DISQUE DE TURBOMACHINE**
VERFAHREN UND ELEKTRODE ZUM ERZEUGEN VON HOHLRÄUMEN FÜR EINE TURBOMASCHINENPLATTE
METHOD AND ELECTRODE FOR PRODUCING CAVITIES FOR A TURBOMACHINE DISK

(30) Priorité: 17.06.2013 FR 1355647
(43) Date de publication de la demande: 27.04.2016
(73) Titulaire: SAFRAN AIRCRAFT ENGINES, 75015 Paris (FR)
(72) Inventeur: LECOMTE, Janvier, 91230 Montgeron (FR); BUELYHA, Jean-Michel, 21200 Vignoles (FR); KRAFT, Juri, 57603 Forbach Cedex (FR); GRÜTZMACHER, Andreas, 57603 Forbach Cedex (FR)
(74) Mandataire: Cabinet Camus Lebkiri
(86) Numéro de dépôt international: PCT/FR2014/051358
(87) Numéro de publication internationale: WO 2014/202862

(56) Documents cités:
- EP-A2- 2 011 597
- WO-A1-2012/028830
- US-A- 3 288 699

## Description

### DOMAINE TECHNIQUE DE L'INVENTION

L'invention se rapporte au domaine général de l'aéronautique. Elle concerne les disques de turbine de turbomachine et plus particulièrement les procédés de réalisation des alvéoles de rétention axiale des aubes portées par les disques. US 2388699 divulgue un tel disque et un tel procédé.

### ARRIERE PLAN TECHNOLOGIQUE DE L'INVENTION

Une roue de turbine de turbomachine est composée d'un disque et d'aubes mobiles entrainées en rotation par le disque sous l'effet d'un écoulement de fluide de l'amont vers l'aval à travers la turbine. On note que les termes « amont » et « aval » sont à considérer par rapport à une direction générale d'écoulement de fluides à travers la turbomachine, allant de l'amont vers l'aval.

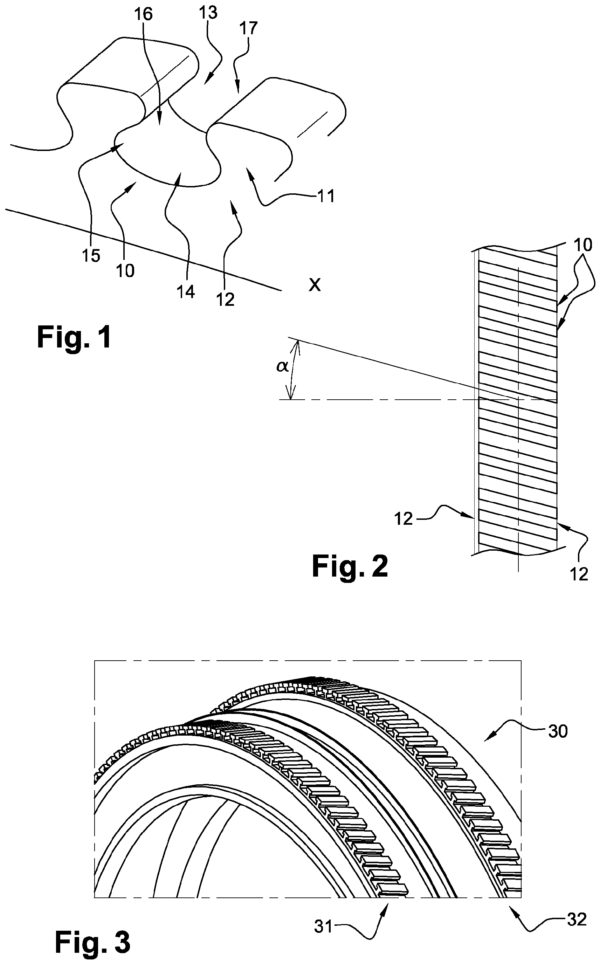

Pour le montage des aubes, le disque comporte sur sa surface circonférentielle une pluralité de dents uniformément réparties, faisant saillie radialement vers l'extérieur du disque et s'étendant entre deux surfaces latérales parallèles du disque, lesdites surfaces étant orthogonales à l'axe de rotation du disque. Les dents sont régulièrement espacées les unes des autres sur toute la circonférence du disque. Les espaces entre deux dents adjacentes délimitent des alvéoles dans lesquelles sont engagées les aubes de la roue par leurs pieds respectifs, permettant un maintien radial des aubes par liaison de forme. Une alvéole 10 délimitée par deux dents 11, est schématiquement représentée à la figure 1. L'alvéole s'étend entre deux surfaces latérales 12 du disque. On distinguera plusieurs zones d'une alvéole 10 :
- L'ouverture 13, qui est la zone ouverte radialement vers l'extérieur
- Le fond 14, qui est la zone opposée à l'ouverture 13, servant de support radial pour un pied d'aube
- Les deux flancs 15, qui sont les deux zones inclinées de part et d'autre de l'alvéole 10, s'étendant entre le fond 14 et l'ouverture 13, et entre les deux surfaces latérales 12 du disque
- L'entrée 16 et la sortie 17, qui sont les zones ouvertes au niveau des surfaces latérales 12 du disque.

Les alvéoles sont généralement inclinées par rapport à l'axe X du disque, comme le montre la figure 2. La figure 2 montre une pluralité d'alvéoles 10 vues depuis leurs ouvertures 13. Les alvéoles 10 s'étendent entre les deux surfaces latérales 12 selon une direction inclinée selon un angle α par rapport à l'axe X du disque. Dans l'exemple représenté, l'angle α vaut quinze degrés.

Actuellement, étant donné la contrainte d'inclinaison des alvéoles, les alvéoles sont classiquement usinées une à une, par une opération de brochage. Une broche rectiligne dont la section correspond au profil d'une alvéole permet un enlèvement de matière de sorte à former les alvéoles. On note que l'opération de brochage peut être remplacée par une opération de fraisage. Les alvéoles subissent ensuite une opération de rayonnage en entrée et sortie d'alvéole. Le rayonnage permet de supprimer les arêtes vives au niveau de l'entrée et de la sortie des alvéoles, pour éviter une concentration de contraintes mécaniques dans ces zones. Pour finir, un usinage de la surface circonférentielle du disque est réalisé. L'usinage de la surface circonférentielle du disque correspond à l'usinage des parties extrémales 18 des dents 11.

Cependant, les opérations d'usinage des alvéoles (par brochage ou fraisage), de rayonnage et d'usinage de la surface circonférentielle du disque demandent des investissements lourds (souvent plusieurs millions d'euros) et sont coûteuses en consommables.

De plus, la réalisation d'alvéoles est longue puisqu'il faut réaliser trois opérations successives.

En outre, dans le cas de disques bi-étages, dont un exemple est illustré à la figure 3, on ne peut pas réaliser d'opérations de brochage ou fraisage sur le disque de plus faible diamètre. La figure 3 représente en effet un disque bi-étage 30, comprenant un premier étage 31 et un second étage 32, le premier étage 31 ayant un diamètre plus petit que le second étage 32. On comprend qu'une broche ne peut pas être utilisée pour réaliser les alvéoles 33 du premier étage 31 sans endommager le deuxième étage 32.

### DESCRIPTION GENERALE DE L'INVENTION

L'invention offre une solution aux problèmes évoqués précédemment, en proposant un procédé de réalisation d'alvéoles inclinées d'un disque de turbomachine, applicable aux disques bi-étages, et permettant de s'affranchir d'opérations de brochage ou de fraisage. Dans un mode de réalisation préféré, l'invention permet en outre de réaliser les trois opérations précédemment décrites en une fois.

Selon un premier aspect, l'invention concerne donc essentiellement un procédé de réalisation d'une pluralité d'alvéoles dans un disque de turbomachine, lesdites alvéoles s'étendant entre une première surface latérale et une deuxième surface latérale d'un disque de turbomachine, lesdites première surface et deuxième surface s'étendant orthogonalement à un axe du disque.

Le procédé comporte les étapes suivantes :
- Positionner un anneau en vis-à-vis de la première surface de sorte à centrer l'anneau sur l'axe du disque, ledit anneau comportant une périphérie intérieure comprenant une pluralité de saillies de formes complémentaires aux formes des alvéoles à réaliser
- Mettre en circulation un électrolyte à proximité des saillies de l'anneau
- Activer une première translation de l'anneau le long de l'axe du disque en direction de la deuxième surface
- Activer une rotation du disque autour de l'axe du disque
- Générer une impulsion de courant électrique dans l'électrolyte lorsque l'anneau est sensiblement au niveau de la première surface, ladite impulsion provoquant une dissolution ionique du disque au niveau des saillies de l'anneau
- Réduire la vitesse de rotation à une première vitesse réduite, lorsque l'anneau est sensiblement au niveau de la première surface, pendant une première durée
- Stopper la première translation de l'anneau lorsque l'anneau a été translaté au-delà de la deuxième surface.

Par « l'objet A est de forme complémentaire à la forme de l'objet B », on entend que, sous réserve de dimensions adéquates, l'objet A s'emboite dans l'objet B comme des pièces de puzzle. On parlera aussi de « forme inverse ». On note que la notion de forme est indépendante de la notion de dimensions. Par exemple, des poupées russes emboitées ont la même forme, mais sont de dimensions différentes.

Réduire la vitesse de rotation à une première vitesse réduite, lorsque l'anneau est sensiblement au niveau de la première surface, permet d'éviter une étape d'usinage d'arêtes vives. Cela permet en effet de générer des rayons de courbure en entrée d'alvéoles. La première durée et la première vitesse sont choisies en fonction du rayonnage souhaité.

On note que stopper la première translation de l'anneau lorsque l'anneau a été translaté au-delà de la deuxième surface, permet notamment, dans le cas d'un disque bi-étage, de stopper le déplacement de l'anneau avant que celui-ci atteigne l'étage suivant celui qui vient d'être usiné.

Outre les caractéristiques qui viennent d'être évoquées dans le paragraphe précédent, le procédé selon le premier aspect de l'invention peut présenter une ou plusieurs caractéristiques complémentaires parmi les suivantes, considérées individuellement ou selon toutes les combinaisons techniquement possibles.

Selon un mode de réalisation non limitatif, le procédé comporte l'étape suivante : changer le sens de rotation du disque et activer une deuxième translation de l'anneau le long de l'axe du disque, en direction de la première surface. Ainsi, on peut retirer l'anneau, notamment dans le cas d'un disque bi-étage.

Selon un mode de réalisation non limitatif, la première vitesse réduite est nulle. Ce mode de réalisation est simple à mettre en œuvre.

Selon un mode de réalisation préféré, le procédé comporte une étape suivante :
- Réduire la vitesse de rotation à une deuxième vitesse réduite, lorsque l'anneau est sensiblement au niveau de la deuxième surface, pendant une deuxième durée.

Réduire la vitesse de rotation à une deuxième vitesse réduite, lorsque l'anneau est sensiblement au niveau de la deuxième surface, permet d'éviter une étape d'usinage d'arêtes vives. Cela permet en effet de générer des rayons de courbure en sortie d'alvéoles. La deuxième durée et la deuxième vitesse sont choisies en fonction du rayonnage souhaité.

Selon un mode de réalisation non limitatif, la deuxième vitesse réduite est nulle. Ce mode de réalisation est simple à mettre en œuvre.

Selon un deuxième aspect, l'invention concerne un anneau pour la réalisation d'une pluralité d'alvéoles dans un disque de turbomachine, comportant :
- une périphérie intérieure comprenant une pluralité de saillies de formes complémentaires aux formes des alvéoles à réaliser
- des moyens de circulation d'un électrolyte à proximité desdites saillies.

Les moyens de circulation d'un électrolyte au niveau des saillies permettent d'améliorer la répartition de l'électrolyte au niveau des saillies.

Outre les caractéristiques qui viennent d'être évoquées dans le paragraphe précédent, l'anneau selon le deuxième aspect de l'invention peut présenter une ou plusieurs caractéristiques complémentaires parmi les suivantes, considérées individuellement ou selon toutes les combinaisons techniquement possibles.

Selon un mode de réalisation préféré, l'anneau comporte deux couches superposées :
- une couche intermédiaire annulaire comportant la périphérie intérieure comprenant la pluralité de saillies
- une couche inférieure annulaire comportant une partie des moyens de circulation d'électrolyte :
   - une pluralité d'ergots situés au niveau de chaque saillie, les ergots comportant une pluralité de micro-canaux
   - une pluralité de canaux transversaux alimentant les micro-canaux
   - un canal circulaire alimentant les canaux transversaux.

En outre l'anneau comporte une couche supérieure annulaire superposée à la couche intermédiaire, comportant des moyens d'alimentation en électrolyte du canal circulaire.

Avantageusement, l'anneau selon le deuxième aspect de l'invention est utilisé lors de la mise en œuvre du procédé selon le premier aspect de l'invention.

Selon un troisième aspect, l'invention concerne un dispositif pour la réalisation d'une pluralité d'alvéoles dans un disque de turbomachine, lesdites alvéoles s'étendant entre une première surface latérale circulaire et une deuxième surface latérale circulaire d'un disque de turbomachine, lesdites première surface et deuxième surface s'étendant orthogonalement à un axe du disque, ledit dispositif comportant :
- Des moyens de positionnement d'un anneau en vis-à-vis de la première surface de sorte à centrer l'anneau sur l'axe du disque,
- Des moyens de propagation d'un électrolyte à proximité des saillies de l'anneau
- Des moyens de génération d'une impulsion électrique dans l'électrolyte
- Des moyens de translation de l'anneau le long de l'axe du disque
- Des moyens de rotation du disque autour de l'axe du disque.

Outre les caractéristiques qui viennent d'être évoquées dans le paragraphe précédent, le dispositif selon le troisième aspect de l'invention peut comporter des moyens de réglage de la vitesse de rotation du disque.

Avantageusement, le dispositif selon le troisième aspect de l'invention est utilisé pour mettre en œuvre le procédé selon le premier aspect de l'invention.

### BREVE DESCRIPTION DES FIGURES

Les figures ne sont présentées qu'à titre indicatif et nullement limitatif de l'invention. Les figures montrent :
- à la figure 1, déjà décrite, une représentation schématique d'une alvéole d'un disque de turbomachine
- à la figure 2, déjà décrite, une représentation schématique d'une pluralité d'alvéoles inclinées d'un disque de turbomachines
- à la figure 3, déjà décrite, une représentation schématique d'un disque bi-étage de turbomachine
- à la figure 4, un schéma illustratif d'une méthode d'usinage électrochimique
- à la figure 5, une représentation schématique d'un anneau et d'un disque avant la mise en œuvre d'un procédé selon l'invention
- à la figure 6, une représentation schématique de l'anneau et du disque de la figure 4, au cours d'une étape du procédé
- à la figure 7, une représentation schématique d'une trajectoire hélicoïdale
- à la figure 8, une représentation schématique d'un dispositif selon un mode de réalisation non limitatif de l'invention
- à la figure 9, une représentation schématique d'un anneau selon un mode de réalisation non limitatif de l'invention, ledit anneau comportant trois couches
- à la figure 10, une représentation schématique de deux couches de l'anneau de la figure 9.

### DESCRIPTION DETAILLEE D'AU MOINS UN MODE DE REALISATION DE L'INVENTION

Sauf précision contraire, un même élément apparaissant sur des figures différentes présente une référence unique.

Le procédé utilise une méthode d'usinage électrochimique, le « Pulsed Electrical Chemical Machining » en anglais, abrégé PECM, connu de l'homme du métier, dont les principes de base sont donnés ci-après. Le PECM est un dérivé de l'« Electrical Chemical Machining » en anglais, abrégé ECM, qui est un usinage électrochimique par dissolution anodique ou oxydoréduction de la matière d'une pièce. Les formes usinées sont obtenues à l'aide d'un outil reproduisant sa forme inverse dans la pièce par l'enfonçage de l'outil dans la pièce. En d'autres termes, les formes de l'outil et de la pièce sont complémentaires.

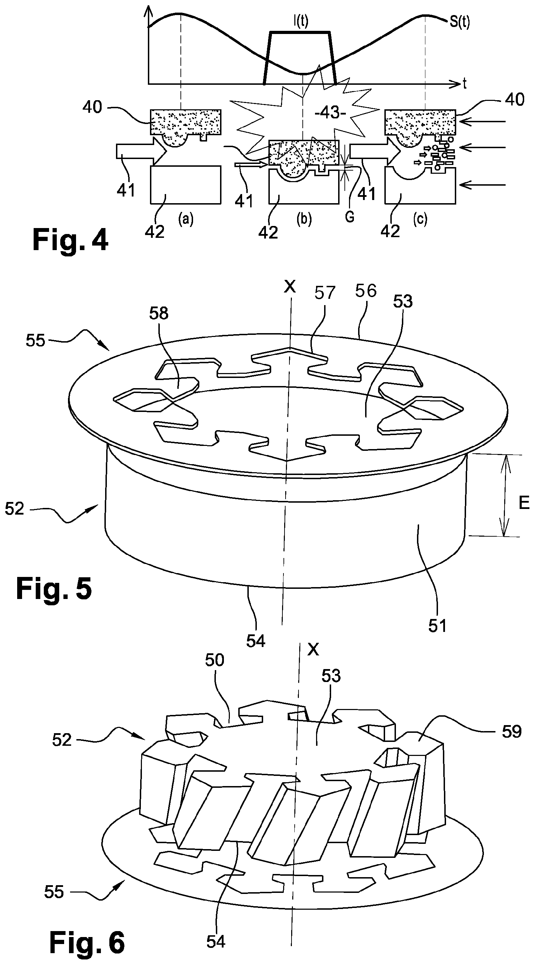

Plus précisément, en référence à la figure 4, le PECM utilise un courant pulsé I(t) associé à un mouvement oscillatoire S(t) d'un outil 40. Un électrolyte 41 sous pression circule entre l'outil 40 et une pièce 42 à usiner (étapes (a), (b) et (c)). Les formes de l'outil 40 et de la pièce 42 n'ont pas de rapport avec l'invention, et servent uniquement à illustrer le principe du PECM. Initialement, l'outil 40 est en position haute, c'est-à-dire au-dessus de la pièce 42 (étape (a)). L'outil 40 est translaté en direction de la pièce. Lorsque l'outil 40 est au niveau de la pièce 42, une impulsion de courant I(t) est déclenchée dans l'électrolyte 41 (étape (b)). L'outil 40 joue alors le rôle de cathode, la pièce 42 joue le rôle d'anode, et une dissolution ionique 43 s'opère. Puis la matière dissoute et les calories sont évacuées par l'électrolyte 41 (étape (c)).

On note que l'outil 40 et la pièce 42 sont toujours distantes d'un intervalle G minimum appelé « intervalle de travail ». L'avantage du PECM par rapport à l'ECM est de réduire cet intervalle de travail et ainsi augmenter la précision de l'usinage.

En référence aux figures 5 et 6, l'invention propose un procédé et un dispositif pour réaliser une pluralité d'alvéoles 50 au niveau d'une surface circonférentielle 51 d'un disque 52 de turbomachine. Comme expliqué précédemment, l'espace entre deux alvéoles 50 est appelé une dent 59. En d'autres termes, la surface circonférentielle 51 du disque 52 de turbomachine comporte une alternance de dents 59 et d'alvéoles 50 juxtaposées.

On note que les figures 1 et 2 représentent un disque 52 extrêmement simplifié pour aider à la compréhension de l'invention. Les alvéoles 50 s'étendent entre une première surface latérale 53 et une deuxième surface latérale 54 du disque 52, selon un angle α par rapport à l'axe X du disque 52. Les première surface 53 et deuxième surface 54 sont sensiblement parallèles l'une à l'autre et orthogonales à l'axe X du disque 52.

Le dispositif et le procédé mettent en œuvre un anneau 55 qui sera décrit en détail par la suite. L'anneau 55 joue le rôle de cathode et le disque 52 joue le rôle d'anode pour réaliser un usinage électrochimique des alvéoles 50 par PECM. L'anneau 55 présente une faible épaisseur par rapport à l'espace E entre la première surface 53 et la deuxième surface 54, et comporte une périphérie extérieure 56 et une périphérie intérieure 57.

La périphérie intérieure 57 de l'anneau 55 comporte une pluralité de saillies 58 de formes complémentaires aux formes de alvéoles 50 à réaliser, et de dimensions légèrement plus faibles à cause de l'intervalle de travail G. De plus, entre les saillies 58, la périphérie intérieure 57 présente une forme inverse des dents 59 à réaliser. En effet, le diamètre de la périphérie extérieure 56 est plus grand que le diamètre du disque 52. Ainsi, les motifs usinés dans le disque 52 sont les motifs de la périphérie intérieure 57 de l'anneau 55. L'usinage des alvéoles 50 et l'usinage de la circonférence extérieure du disque 52 sont ainsi réalisées en une fois.

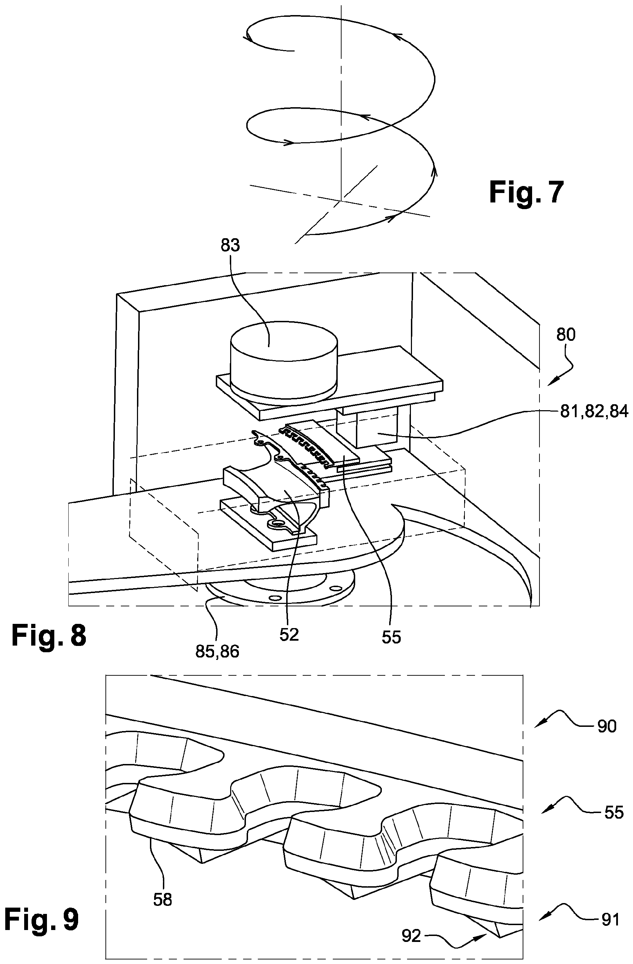

Pour réaliser des alvéoles 50 inclinées, l'anneau 55 est enfoncé dans le disque 52 selon un mouvement de translation pendant que le disque 52 subit une rotation autour de son axe X. Ainsi, le mouvement relatif de l'anneau 55 par rapport au disque 52 est un mouvement hélicoïdal, comme illustré à la figure 7.

Plus précisément, le procédé selon un mode de réalisation non limitatif de l'invention comporte les étapes suivantes :
- Positionner l'anneau 55 en vis-à-vis de la première surface 53 de sorte à centrer l'anneau 55 sur l'axe X du disque 52. Ce positionnement correspond à celui illustré à la figure 5. Dans ce mode de réalisation, le disque 52 est posé à l'horizontal sur un plateau.
- Mettre en circulation un électrolyte à proximité des saillies 58 de l'anneau 55. Les moyens de circulation de l'électrolyte sont détaillés plus loin. L'électrolyte circule en boucle fermée durant toute la durée du procédé. L'électrolyte a plusieurs rôles : transporter le courant, chasser la matière dissoute, et refroidir l'anneau 55 et le disque 52. On note que la température de l'électrolyte doit être maintenue entre 20 et 30 degrés Celcius.
- Activer une première translation de l'anneau 55 le long de l'axe X du disque 52 en direction de la deuxième surface.
- Activer une rotation du disque 52 autour de l'axe X du disque 52, par exemple par rotation du plateau sur lequel est positionné l'anneau 55. La vitesse de rotation du disque 52 est réglable. On note que l'activation de la première translation peut être réalisée après l'activation de la rotation du disque 52, ou en même temps. Dans le mode de réalisation décrit, la première translation s'effectue à vitesse constante, et seule la vitesse de rotation du disque 52 est modifiable. Cette combinaison est la plus simple à mettre en œuvre. Dans d'autres modes de réalisation, le disque 52 est en rotation à vitesse constante et la vitesse de la première translation est modifiable. Dans un autre mode de réalisation, la vitesse de la première translation et la vitesse de rotation sont toutes deux modifiables. En effet, la combinaison de la vitesse de rotation et de la vitesse de la première translation détermine l'angle α des alvéoles 50.
- Réduire la vitesse de rotation à une première vitesse réduite, voire stopper la rotation du disque 52, lorsque l'anneau 55 est sensiblement au niveau de la première surface 53, pendant une première durée. Cela permet de générer les rayons de courbure en entrée d'alvéole 50. La première durée et la première vitesse sont choisies en fonction du rayonnage souhaité. La première vitesse réduite est par exemple nulle : ainsi, le rayon de courbure ne dépend que de la première durée, et la mise en œuvre est simplifiée.
- Générer une impulsion de courant électrique dans l'électrolyte lorsque l'anneau 55 est sensiblement au niveau de la première surface 53, ladite impulsion provoquant une dissolution ionique du disque 52 au niveau des saillies 58 de l'anneau 55. La densité de courant est déterminée de sorte à dissoudre correctement la matière du disque 52. En effet, en fonction des composés, la dissolution est plus ou moins rapide. On note que les disques de turbomachine sont généralement réalisés en alliage à base nickel ; dans ce cas, une densité de courant entre 25 et 100 Ampères par centimètres carrés est appropriée. D'autre part, plusieurs paramètres influent sur le nombre et la profondeur des piqures et la longueur des attaques inter-granulaires, notamment la nature de l'électrolyte, le débit d'électrolyte, la densité de courant, et le générateur de courant utilisé.
- Réduire la vitesse de rotation à une deuxième vitesse réduite, voire stopper la rotation du disque 52, lorsque l'anneau 55 est sensiblement au niveau de la deuxième surface 54, pendant une deuxième durée. Cela permet de générer les rayons de courbure en sortie d'alvéole 50. La deuxième durée et la deuxième vitesse sont choisies en fonction du rayonnage souhaité. La deuxième vitesse réduite est par exemple nulle : ainsi, le rayon de courbure ne dépend que de la deuxième durée, et la mise en œuvre est simplifiée.
- Stopper la première translation de l'anneau 55 lorsque l'anneau 55 a été translaté au-delà de la deuxième surface 54. Ce positionnement correspond à celui illustré à la figure 6. On note que dans le cas de disques 52 bi-étages, la première translation doit être stoppée avant que l'anneau 55 n'atteigne l'étage suivant, pour ne pas l'endommager.
- Activer une deuxième translation de l'anneau 55 le long de l'axe X du disque 52 en direction de la première surface 53, pour retirer l'anneau 55 et évacuer la matière dissoute et les calories. La rotation du disque 52 doit pour cela être inversée, pour que l'anneau 55 n'endommage pas le disque 52 et les alvéoles 50 lors de son retrait.

La figure 8 illustre un dispositif 80 permettant de mettre en œuvre le procédé précédemment décrit, selon un mode de réalisation de l'invention. Le disque 52 et l'anneau 55 sont représentés tronqués. Le dispositif 80 comporte :
- des moyens de positionnement 81 de l'anneau 55 en vis-à-vis de la première surface 53 de sorte à centrer l'anneau 55 sur l'axe X du disque 52,
- des moyens de propagation 82 de l'électrolyte à proximité des saillies 58 de l'anneau 55
- des moyens de génération 83 d'une impulsion électrique dans l'électrolyte
- des moyens de translation 84 de l'anneau 55 le long de l'axe X du disque 52
- des moyens de rotation 85 du disque 52 autour de l'axe X du disque 52
- des moyens de réglage 86 de la vitesse de rotation du disque 52.

On note que des masques isolants et étanches peuvent être utilisés pour protéger des projections d'électrolyte et des courants de fuite toutes les surfaces du disque 52 autres que celles concernée par le procédé.

La figure 9 représente un anneau 55 utilisé lors du procédé et utilisé par le dispositif, selon un mode de réalisation non limitatif de l'invention. L'anneau 55 comporte trois couches superposées :
- une couche supérieure 90 isolante
- une couche intermédiaire 91 portant les saillies 58
- une couche inférieure 92 conductrice comportant des moyens de circulation d'électrolyte.

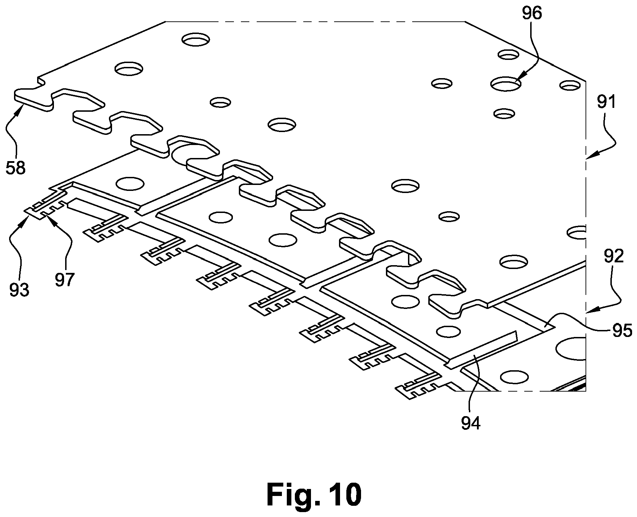

En référence à la figure 10, qui montre la couche intermédiaire 91 et la couche inférieure 92 en vue éclatée, lesdits moyens de circulation comportent :
- une pluralité d'ergots 93 situés au niveau de chaque saillie 58, les ergots comportant une pluralité de micro-canaux 97
- une pluralité de canaux transversaux 94 alimentant les micro-canaux 97
- un canal circulaire 95 alimentant les canaux transversaux 94.

L'électrolyte est amené via le canal circulaire 95, qui alimente les canaux transversaux 94, qui eux-mêmes alimentent les micro-canaux 94. Cela permet d'assurer une répartition uniforme et en quantité suffisante de l'électrolyte au niveau des saillies 58.

Le canal circulaire 95 est lui-même alimenté via des ouvertures 96 pratiquées à plusieurs endroits de la couche intermédiaire 91 et de la couche supérieure 90.

## Revendications

1. Procédé de réalisation d'une pluralité d'alvéoles (50) dans un disque (52) de turbomachine, lesdites alvéoles (50) s'étendant entre une première surface latérale (53) et une deuxième surface latérale (54) d'un disque (52) de turbomachine, lesdites première surface (53) et deuxième surface (54) s'étendant orthogonalement à un axe (X) du disque (52), le procédé comportant des étapes suivantes :
- Positionner un anneau (55) en vis-à-vis de la première surface (53) de sorte à centrer l'anneau (55) sur l'axe (X) du disque (52), ledit anneau (55) comportant une périphérie intérieure (57) comprenant une pluralité de saillies (58) de formes complémentaires aux formes des alvéoles (50) à réaliser
- Mettre en circulation un électrolyte à proximité des saillies (58) de l'anneau (55)
- Activer une première translation de l'anneau (55) le long de l'axe (X) du disque (52) en direction de la deuxième surface
- Activer une rotation du disque (52) autour de l'axe (X) du disque (52)
- Générer une impulsion de courant électrique dans l'électrolyte lorsque l'anneau (55) est sensiblement au niveau de la première surface, ladite impulsion provoquant une dissolution ionique du disque (52) au niveau des saillies (58) de l'anneau (55), le procédé étant **caractérisé par** les étapes suivantes :
- Réduire la vitesse de rotation à une première vitesse réduite, lorsque l'anneau (55) est sensiblement au niveau de la première surface (53), pendant une première durée.
- Stopper la première translation de l'anneau (55) lorsque l'anneau (55) a été translaté au-delà de la deuxième surface (54).

2. Procédé selon la revendication précédente, **caractérisé en ce qu'**il comporte une étape suivante :
- Activer une deuxième translation de l'anneau (55) le long de l'axe (X) du disque (52) en direction de la première surface.

3. Procédé selon la revendication précédente, **caractérisé en ce que** la première vitesse réduite est nulle.

4. Procédé selon l'une des revendications précédentes, **caractérisé en ce qu'**il comporte une étape suivante :
- Réduire la vitesse de rotation à une deuxième vitesse réduite, lorsque l'anneau (55) est sensiblement au niveau de la deuxième surface (54), pendant une deuxième durée.

5. Procédé selon la revendication précédente, **caractérisé en ce que** la deuxième vitesse réduite est nulle.

6. Anneau (55) pour la réalisation d'une pluralité d'alvéoles (50) dans un disque (52) de turbomachine, **caractérisé en ce qu'**il comporte :
- une périphérie intérieure (57) comprenant une pluralité de saillies (58) de formes complémentaires aux formes des alvéoles (50) à réaliser, **caractérisé en ce qu'**il comporte trois couches superposées :
- une couche supérieure (90) annulaire isolante,
- une couche intermédiaire (91) annulaire comprenant la pluralité de saillies (58), et
une couche inférieure (92) annulaire conductrice comportant une partie des moyens de circulation d'un électrolyte, les moyens de circulation de l'électrolyte étant à proximité desdites saillies (58).

7. Anneau (55) selon la revendication précédente, **caractérisé en ce que** la partie des moyens de circulation d'électrolyte comprend :
• une pluralité d'ergots (93) situés au niveau de chaque saillie (58), les ergots (93) comportant une pluralité de micro-canaux (97)
• une pluralité de canaux transversaux (94) alimentant les micro-canaux (97)
• un canal circulaire (95) alimentant les canaux transversaux (94).

8. Anneau (55) selon la revendication précédente, **caractérisé en ce que** la couche supérieure (90) annulaire superposée à la couche intermédiaire (91), comporte des moyens d'alimentation (96) en électrolyte du canal circulaire (95).

## Patentansprüche

1. Herstellungsverfahren einer Vielzahl von Kammern (50) in einer Scheibe (52) einer Turbomaschine, wobei die genannten Kammern (50) sich zwischen einer ersten seitlichen Fläche (53) und einer zweiten seitlichen Fläche (54) einer Scheibe (54) einer Turbomaschine erstrecken, wobei die genannte erste Fläche (53) und die zweite Fläche (54) sich lotrecht zu einer Achse (X) der Scheibe (52) erstrecken, wobei das Verfahren folgende Schritte umfasst:
- Positionieren eines Rings (55) gegenüber der ersten Fläche (53) derart, dass der Ring (55) auf der Achse (XY) der Scheibe (52) zentriert wird, wobei der genannte Ring (55) eine innere Peripherie (57) umfasst, umfassend eine Vielzahl von Vorsprüngen (58) in komplementären Formen zu den Formen der herzustellenden Kammern (50);
- In-Umlauf-Bringen eines Elektrolyts in der Nähe der Vorsprünge (58) des Rings (55)
- Aktivieren einer ersten Translation des Rings (55) entlang der Achse (X) der Scheibe (52) in Richtung der zweiten Fläche
- Aktivieren einer Drehung der Scheibe (52) um die Achse (X) der Scheibe (52)
- Erzeugen eines elektrischen Stromimpulses im Elektrolyten, wenn der Ring (55) deutlich an der ersten Fläche ist, wobei der genannte Impuls eine ionische Auflösung der Scheibe (52) an den Vorsprüngen (58) des Rings (55) hervorruft,
wobei das Verfahren durch die folgenden Schritte gekennzeichnet ist:
- während einer ersten Dauer Verringern der Drehgeschwindigkeit auf eine erste verringerte Geschwindigkeit, wenn der Ring (55) deutlich an der ersten Fläche (53) ist.
- Stoppen der ersten Translation des Rings (55), wenn der Ring (55) über die zweite Fläche (54) hinweg übersetzt wird.

2. Verfahren gemäß dem voranstehenden Anspruch, **dadurch gekennzeichnet, dass** es einen folgenden Schritt umfasst:
- Aktivieren einer zweiten Translation des Rings (55) entlang der Achse (X) der Scheibe (52) in Richtung der ersten Fläche.

3. Verfahren gemäß dem voranstehenden Anspruch, **dadurch gekennzeichnet, dass** die erste verringerte Geschwindigkeit null ist.

4. Verfahren gemäß einem der voranstehenden Ansprüche, **dadurch gekennzeichnet, dass** es einen folgenden Schritt umfasst:
- während einer zweiten Dauer Verringern der Drehgeschwindigkeit auf eine zweite verringerte Geschwindigkeit, wenn der Ring (55) deutlich an der zweiten Fläche (54) ist.

5. Verfahren gemäß dem voranstehenden Anspruch, **dadurch gekennzeichnet, dass** die zweite verringerte Geschwindigkeit null ist.

6. Ring (55) zum Realisieren einer Vielzahl von Kammern (50) in einer Scheibe (52) der Turbomaschine, **dadurch gekennzeichnet, dass** er umfasst:
- eine innere Peripherie (57), umfassend eine Vielzahl von Vorsprüngen (58) in komplementären Formen zu den herzustellenden Kammern (50), **dadurch gekennzeichnet, dass** er drei überlagerte Schichten umfasst:
- eine obere, ringförmige, isolierende Schicht (90),
- eine ringförmige Zwischenschicht (91), umfassend die Vielzahl von Vorsprüngen (58), und
- eine untere, ringförmige, leitende Schicht (92), umfassend einen Teil der Umlaufmittel eines Elektrolyts, wobei die Umlaufmittel des Elektrolyts in der Nähe der genannten Vorsprünge (58) sind.

7. Ring (55) gemäß dem voranstehenden Anspruch, **dadurch gekennzeichnet, dass** der Teil der Elektrolyt-Umlaufmittel umfasst:
• eine Vielzahl von Nocken (93), die an jedem Vorsprung (58) angeordnet sind, wobei die Nocken (93) eine Vielzahl von Mikrokanälen (97) umfasst
• eine Vielzahl von querverlaufenden Kanälen (94), die die Mikrokanäle (97) versorgen
• einen kreisförmigen Kanal (95), der die querverlaufenden Kanäle (94) versorgt.

8. Ring (55) gemäß dem voranstehenden Anspruch, **dadurch gekennzeichnet, dass** die obere ringförmige Schicht (90), die der Zwischenschicht (91) überlagert ist, Versorgungsmittel (96) des kreisförmigen Kanals (95) mit Elektrolyten umfasst.

## Claims

1. Method for producing a plurality of cavities (50) in a turbomachine disk (52), said cavities (50) extending between a first lateral surface (53) and a second lateral surface (54) of a turbomachine disk (52), said first surface (53) and second surface (54) extending orthogonally to an axis (X) of the disk (52), the method comprising the following steps:
- Positioning a ring (55) facing the first surface (53) so as to centre the ring (55) on the axis (X) of the disk (52), said ring (55) comprising an inner periphery (57) including a plurality of protrusions (58) complementary in shape to the cavities (50) that are to be produced
- Circulating an electrolyte close to the protrusions (58) on the ring (55)
- Activating a first translational movement of the ring (55) along the axis (X) of the disk (52) towards the second surface
- Activating a rotation of the disk (52) about the axis (X) of the disk (52)
- Generating an electric current pulse in the electrolyte when the ring (55) is substantially at the first surface, said pulse resulting in the ionic dissolution of the disk (52) at the protrusions (58) on the ring (55),
the method being **characterised by** the following steps:
- Reducing the speed of rotation to a first reduced speed, when the ring (55) is substantially at the first surface (53), for a first period of time
- Stopping the first translation of the ring (55) when the ring (55) has been moved in translation beyond the second surface (54).

2. Method according to the preceding claim, **characterised in that** it comprises a following step:
- Activating a second translational movement of the ring (55) along the axis (X) of the disk (52) towards the first surface.

3. Method according to the preceding claim, **characterised in that** the first reduced speed is zero.

4. Method according to one of the preceding claims, **characterised in that** it comprises a following step:
- Reducing the speed of rotation to a second reduced speed, when the ring (55) is substantially at the second surface (54), for a second period of time.

5. Method according to the preceding claim, **characterised in that** the second reduced speed is zero.

6. Ring (55) for producing a plurality of cavities (50) in a turbomachine disk (52), comprising:
- an inner periphery (57) including a plurality of protrusions (58) complementary in shape to the cavities (50) that are to be produced, **characterised in that** it comprises three superimposed layers:
- an annular insulating upper layer (90)
- an annular intermediate layer (91) comprising the plurality of protrusions (58), and
- an annular conducting lower layer (92) comprising a part of the means of circulating electrolyte, said means of circulating electrolyte being close to said protrusions (58).

7. Ring (55) according to the preceding claim, **characterised in that** the part of the means of circulating electrolyte comprises:
• a plurality of lugs (93) situated at each protrusion (58), the lugs (93) comprising a plurality of micro-channels (97)
• a plurality of transversal channels (94) supplying the micro-channels (97)
• a circular channel (95) supplying the transversal channels (94).

8. Ring (55) according to the preceding claim, **characterised in that** it comprises an annular upper layer (90) superimposed on the intermediate layer (91), comprising means of supplying (96) with electrolyte the circular channel (95).
